Europäisches Patentamt

European Patent Office

Office européen des brevets

(11) Publication number: **0 347 895 B1**

# EUROPEAN PATENT SPECIFICATION

(45) Date of publication of patent specification: **18.11.93**  (51) Int. Cl.5: **C08L 83/04**, C08K 9/10, C08J 3/12

(21) Application number: **89111335.9**

(22) Date of filing: **22.06.89**

The file contains technical information submitted
after the application was filed and not included in
this specification

(54) **Method for preparing a particulate material comprising a platinum-containing hydrosilylation catalyst and a silicone resin.**

(30) Priority: **23.06.88 JP 155964/88**

(43) Date of publication of application:
**27.12.89 Bulletin 89/52**

(45) Publication of the grant of the patent:
**18.11.93 Bulletin 93/46**

(84) Designated Contracting States:
**BE DE FR GB**

(56) References cited:
**EP-A- 0 072 474**
**EP-A- 0 300 645**

(73) Proprietor: **TORAY SILICONE COMPANY,
LIMITED
2-3-16, Muro-machi
Nihonbashi
Chuo-ku Tokyo 103(JP)**

(72) Inventor: **Atasushi, Togashi
6,1-chome, Yushudai nishi
Ichihara-shi Chiba Prefecture(JP)**
Inventor: **Toshio, Saruyama
3-11-13-1101 Tsudanuma
Narashino-shi Chiba Prefecture(JP)**

(74) Representative: **Spott, Gottfried, Dr. et al
Patentanwälte Spott und Puschmann
Sendlinger-Tor-Platz 11
D-80336 München (DE)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

Rank Xerox (UK) Business Services
(3.10/3.6/3.3.1)

**Description**

The present invention relates to a method for preparing a composition in particulate form comprising a platinum-containing hydrosilylation reaction catalyst. More particularly, the present invention relates to a particulate form of a platinum-containing hydrosilylation catalyst that will not cause premature curing when incorporated into organopolysiloxane compositions which cure by a hydrosilylation reaction.

EP-A 0 072 474 discloses a heat curable composition comprising an organopolysiloxane, an organohydrogenpolysiloxane and a platinum containing catalyst which will be cured by a hydrosilylation reaction. The catalyst is a particulate wherein the catalytic active metal is present also in the surface layer.

One objective of the present invention is to provide a platinum-type hydrosilylation catalyst in particulate form. When used as the curing catalyst in a hydrosilylation-curing organopolysiloxane composition, this catalyst composition provides an excellent storage stability while inducing a rapid curing upon heating. A second objective is to provide a relatively simple method for the preparation of said particulate.

The present invention provides a method for preparing a composition in particulate form comprising a hydrosilylation catalyst containing a metal of the platinum group or a compound thereof dispersed in a silicone resin, said method comprising preparing particles having a diameter not exceeding 100 $\mu$m and comprising a mixture of a silicone resin having a softening point of from 50 to 200 $^\circ$C and a platinum containing hydrosilylation catalyst and washing said particulate with a liquid which is a solvent for the platinum containing hydrosilylation reaction catalyst and a non-solvent for said silicone resin.

This invention provides an improved particulate composition comprising a platinum-containing hydrosilylation reaction catalyst dispersed in a solid silicone resin having a softening point within the temperature range of from 50 to 200 $^\circ$C. The improvement comprises an average particle diameter for said particulate not exceeding 100$\mu$m and the essential absence of said catalyst in the surface layer of said particulate.

The characterizing features of the catalyst composition obtained with the present method are 1) an average particle size of less than 100$\mu$m, and 2) the substantial absence of catalyst in the surface layer of the particulate material. The latter is achieved by washing the particulate material in a liquid that is a solvent for the catalyst but not for the resin.

The silicone resin used in the present compositions must have a softening point in the range of from 50 to 200 $^\circ$C. A softening point below 50 $^\circ$C will result in a substantial reduction in storage stability after addition to the hydrosilylation-curing organopolysiloxane composition. At softening points in excess of 200 $^\circ$C, the minimum temperature at which catalytic activity appears becomes too high, and the function as a catalyst is essentially not realized. Viewed from these standpoints, the softening temperature of the silicone resin is preferably from 70 to 150 $^\circ$C.

The molecular and chemical structure of the silicone resin are not particularly crucial. However, it is essential that this resin not be permeable with respect to the platinum-containing hydrosilylation catalyst. Furthermore, when used as a curing catalyst for organopolysiloxane compositions that cure by a hydrosilylation reaction, it is also essential that the silicone resin be insoluble in the organopolysiloxane ingredients of the composition to which the present catalyst composition is added.

Suitable silicone resins include but are not limited to those of the following average unit formula

$R_aSiO_{(4-a)/2}$

where R represents a methyl radical, a phenyl radical or mixtures thereof and the value of $\underline{a}$ is from 0.8 to 1.8.

Examples of platinum-containing hydrosilylation reaction catalysts suitable for use in the present compositions include metals from the platinum group of the periodic table, compounds of these metals, and compositions based on these metals and compounds. It should be understood that other metals from the platinum group of the periodic table, such as palladium and rhodium, can be substituted for platinum. Specific examples of platinum-containing hydrosilylation reaction catalysts are finely divided platinum, chloroplatinic acid, alcohol-modified chloroplatinic acid, platinum/diketone complexes, platinum/olefin complexes, chloroplatinic acid/alkenylsiloxane complexes, and any of these catalysts supported on a carrier such as alumina, silica, carbon black, and the like. Among these, platinum/olefin complexes and chloroplatinic acid/alkenylsiloxane complexes are preferred for their high catalytic activity as hydrosilylation reaction catalysts. The platinum/alkenylsiloxane complexes described in Japanese Patent Publication Number 42-22924 [22,924/67] are particularly preferred.

It is essential that the average diameter of the particles in the present compositions not exceed 100 micrometers in order for the catalytic activity to develop satisfactorily and in order to maintain a stable dispersion in the presence of the curable organopolysiloxane compositions.

The concentration of catalyst in the present compositions is preferably equivalent to a platinum concentration of from 0.01 to 5 weight%.

The structure of the particulate material that constitutes the present composition is characterized by a silicone resin/catalyst mixture encapsulated by a layer of silicone resin which is essentially free of catalyst. As a consequence of this structure, organopolysiloxane compositions curable by a hydrosilylation reaction which contain the present catalyst compositions display excellent storage stability.

In accordance with the present method for preparing catalyst compositions, particles having diameters not exceeding 100μm and comprising a mixture of a silicone resin having a softening point of from 50 to 200° C. and a platinum-containing hydrosilylation catalyst are washed with a liquid which is a solvent for the platinum-containing hydrosilylation reaction catalyst and a non-solvent for said silicone resin.

The procedure used to prepare the mixture of silicone resin with softening point of from 50 to 200° C. and the platinum-containing hydrosilylation catalyst is not particularly critical. Any of the methods known in the art can be used, so long as the average diameter of the resultant particles does not exceed 100 μm These methods include mixing a silicone resin and platinum-type hydrosilylation catalyst on a hot roll as disclosed in Laid Open Japanese Patent Application Number 49-134786, and the method disclosed in United States Patent No. 4,481,341. In accordance with the latter method, silicone resin and a platinum containing hydrosilylation reaction catalyst are dissolved in a co-solvent, and this co-solvent is subsequently removed by evaporation. Procedures for preparing a particulate from such mixtures include but are not limited to grinding and pulverization of solid mixtures using mechanical means as well as methods in which a solution of the mixture is introduced into spray drier.

A preferred method for preparing the present compositions comprises the following process (A), process (B), and process (C).

(A) preparing a solution of a platinum-containing hydrosilylation reaction catalyst and silicone resin with a softening point in the temperature range of 50 to 200° C by dissolving said silicone resin and the catalyst in water-immiscible solvent in which the silicone resin and the platinum-containing catalyst are both soluble, and

(B) then preparing a dispersion by adding the solution to surfactant-containing water while stirring or shaking the water.

(C) Evaporating the water-immiscible solvent from the aqueous dispersion at a temperature below the softening point of the silicone resin to obtain an aqueous dispersion of a particulate comprising the silicone resin and the platinum-containing hydrosilylation reaction catalyst, and then separating the particulate material from the aqueous dispersion.

(D) Washing the particulate with a liquid in which said particulate is washed with a liquid in which the platinum-containing hydrosilylation catalyst is soluble and in which said silicone resin is insoluble.

To explain the preceding method steps in greater detail, in process (A) and (B) a homogeneous solution of silicone resin and platinum-containing hydrosilylation reaction catalyst is dispersed in microparticulate form in water to prepare an aqueous or water-based dispersion. The solvent used here must homogeneously dissolve both the silicone resin and the catalyst, and must also be immiscible with water. Furthermore, in order to facilitate removal of the solvent in process (C), it is preferred that the boiling point of this solvent at atmospheric pressure not exceed 100° C, and it is particularly preferred that its boiling point be from 30 to 70° C.

Suitable solvents for process include but are not limited to methylene chloride, chloroform, tetrahydrofuran, and diethyl ether. The surfactant used here is not particularly crucial as long as it has the ability to generate a water-based dispersion, in emulsion form, of the solution of silicone resin and platinum-type hydrosilylation reaction catalyst. However, surfactants containing atoms such as sulfur and phosphorus which can cause a loss in the activity of the platinum-containing hydrosilylation reaction catalyst should not be used. Suitable surfactants are exemplified by water-soluble polymeric organic compounds such as partially hydrolyzed polyvinyl alcohol.

In process (C), the particulate formed in the water-based solvent dispersion generated by process (B) is separated and recovered. This particulate consists essentially of the silicone resin and platinum-containing hydrosilylation catalyst. Evaporative removal of the solvent from the recovered particulate material must be conducted at a temperature below the softening point of the silicone resin in order to avoid damage to the shape of the particulate. Evaporative solvent removal can be efficiently carried out, for example, by injecting an inert gas (e.g., nitrogen, etc.) into the water-based solvent dispersion at ambient or reduced pressure. Separation of the particulate from the water can be carried out by filtration or centrifugal separation.

In process (D), the surface of the particulate obtained by process steps (A) to (C) is washed with a solvent in order to wash out and remove the platinum-containing hydrosilylation reaction catalyst present in

3

the surface layer of the particulate. This washing solvent must be capable of dissolving the hydrosilylation reaction catalyst while at the same time not dissolving the silicone resin. Selection of a washing solvent is based on the type of platinum-containing hydrosilylation reaction catalyst and silicone resin actually used. One type of washing solvent is an alcohol, particularly methyl alcohol or ethyl alcohol. Low molecular-weight organopolysiloxanes are very suitable when a platinum/alkenylsiloxane complex catalyst is used as the hydrosilylation reaction catalyst. Among these, siloxane oligomers such as hexamethyldisiloxane and cyclic siloxanes such as octamethylcyclotetrasiloxane are particularly preferred.

The purpose of the washing step can be satisfactorily achieved simply by dispersing the particulate comprising silicone resin and platinum-containing hydrosilylation reaction catalyst in a large quantity of the washing solvent with stirring, following which the washing solvent is removed by filtration.

The efficiency of the stirring operation can be boosted using, for example, ultrasound and other Known techniques, so long as these techniques do not cause a deterioration in the platinum-containing hydrosilylation reaction catalyst or silicone resin. It is recommended that the wash temperature not exceed 30°C.

Evaporation of the residual washing solvent remaining following the filtration step yields a particulate catalyst composition of this invention.

The particulate platinum-containing hydrosilylation catalyst obtained using the preferred method of this invention has a structure in which a mixture of silicone resin and a platinum-containing hydrosilylation reaction catalyst is encapsulated by a layer of silicone resin having a softening point of from 50 to 200°C and which is essentially free of catalyst. The particulate does not exhibit catalytic activity with respect to hydrosilylation reactions at room temperature because the platinum-containing catalyst cannot leak to the surface at these temperatures. Catalytic activity is exhibited at temperatures above the silicone resin's softening point because the catalyst is able to bleed out of the particulate. Accordingly, the particulate composition of this invention is an extremely effective curing agent or curing promoter for single-package curable organopolysiloxane compositions which must have long-term storage stability at room temperature.

As an example, a thermosetting organopolysiloxane exhibiting an excellent storage stability is obtained by the addition of the particulate catalyst composition of this invention to a mixture comprising a diorganopolysiloxane having at least two alkenyl radicals in each molecule and an amount of an organohydrogenpolysiloxane sufficient to crosslink the diorganopolysiloxane. The particulate composition of the present invention is also effective as a curing agent for polyether compositions comprising an organohydrogenpolysiloxane and a vinyl-terminated polyether.

The present invention is illustrated using the following examples. In the examples, the reported viscosity values are measured at 25°C and Pa•s(cp = centipoise).

Reference Example 1

Preparation of a platinum/vinylsiloxane complex catalyst

160 g of 1,3-divinyltetramethyldisiloxane and 32 g of chloroplatinic acid ($H_2PtCl_6 \cdot 6H_2O$) were mixed and then blended with heating to 120°C for 1 hour under a nitrogen current. A platinum/vinylsiloxane complex catalyst was obtained by removing the platinum black by-product by filtration and then removing the acid with a water wash. The platinum metal concentration in this catalyst was 4.25 weight%.

Example 1

16.0 g silicone resin exhibiting a softening point of 110°C and consisting essentially of diphenylsiloxane units, dimethylsiloxane units, and phenylsiloxane units in a 12:21:67 molar ratio, respectively, and 2.0 g of the platinum/vinylsiloxane complex catalyst prepared as described in Reference Example 1 were dissolved in 330 g of methylene chloride. This methylene chloride solution was added to water containing 15 g of polyvinyl alcohol (Gosenol® GL-05 from Nippon Gosei Kagaku Kogyo Kabushiki Kaisha) while stirring the water in order to prepare a water-based dispersion of the methylene chloride solution. The entire quantity of methylene chloride was then evaporated off by bubbling nitrogen gas into this aqueous dispersion at 25 to 40°C over 48 hours, thus yielding a suspension comprising a microfine solid dispersed in water. This suspension was placed in a centrifugal separator and the microfine solid was separated. Analysis of the obtained microfine solid revealed it to be a particulate with an average particle size of 7μm containing 0.27 weight% platinum metal. 10 g of this powder was washed once with water and was then placed in approximately 500 g methyl alcohol and washed with stirring. Analysis of the particulate after washing showed it to be a powder with an average particle size of 7μm containing 0.26 weight% platinum metal.

The properties of this particulate as a hydrosilylation reaction catalyst were investigated.

A hydrosilylation-curing organopolysiloxane composition was prepared as follows: 100 g of a dimethylvinylsiloxy-terminated polydimethylsiloxane having a viscosity of (1,500 centistokes) $1.5 \times 10^{-3}$ $m^2$/sec. at 25°C, and 20 g fumed silica having a specific surface area of 200 $m^2$/g and which had been previously hydrophobicized with hexamethyldisilazane were mixed. This was followed by the addition with mixing to homogeneity of 2.8 g of a methylhydrogenpolysiloxane represented by the average molecular formula

$Me_3SiO(Me_2SiO)_3(MeHSiO)_5SiMe_3$.

0.21 g of the particulate prepared as described in the first section of this example was then added to 100 g of the initial organopolysiloxane composition with mixing to homogeneity. The storage stability and thermal curing properties of the obtained curable organopolysiloxane composition were measured, and the obtained results are reported in Table 1. The following properties of the resultant composition were determined using a Curastometer® (Model 3) from the Toyo Baldwin Company as indicators of the thermal curing properties: the time until initiation of curing of the organopolysiloxane composition at 130°C ($I_t$) and the time to achieve 90% of the maximum torque value ($T_{90}$). Storage stability was evaluated by allowing the organopolysiloxane composition to stand for 90 days at 25°C, and determining the change in viscosity during this time period. For comparison an organopolysiloxane composition was prepared as described in the first portion of this example, but using a) the platinum/alkenylsiloxane complex catalyst obtained in Reference Example 1 or b) the powder described in the present example 1 prior to the methyl alcohol wash in place of the methyl alcohol-washed powder. The concentration of platinum metal in both of the comparative compositions was the same as that of the composition containing the methyl alcohol-washed powder. The curing properties and storage stability of these comparison compositions were also measured, and the results are reported in Table 1 as Comparison Example 1 and Comparison Example 2, respectively.

TABLE 1

| Properties | Example 1 | Comparison Example 1 | Comparison Example 2 |
|---|---|---|---|
| Type of Catalyst | powder after methyl alcohol wash | Pt/alkenyl-siloxane complex catalyst | powder before methyl alcohol wash |
| curing properties | | | |
| $I_t$ (seconds) | 15 | 5 | 15 |
| $T_{90}$ (seconds) | 240 | 10 | 240 |
| storage stability | | | |
| viscosity immediately after preparation (centipoise) Pa.S | (3300 cp) 3,3 | (3300 cp) 3,3 | (3300 cp) 3,3 |
| viscosity after 90 days (centipoise) Pa.S | (5500 cp) 5,5 | not measurable (gelled after 5 minutes) | not measurable (gelled after 5 days) |

Example 2

16.0 g of the silicone resin described in Example 1 and 12.0 g of the platinum/vinylsiloxane complex catalyst prepared as described in Reference Example 1 were dissolved in 330 g of methylene chloride. Solid flakes were recovered by the gradual removal of the methylene chloride by injecting nitrogen gas into this methylene chloride solution with stirring. This solid was then ground and filtered through a 100$\mu$m (150 mesh) filter to give a powder (I) with an average particle size of 10 $\mu$m. This particulate contained 0.42 weight% platinum metal. It was then washed with methyl alcohol according to the procedure outlined in Example 1 to yield a powder (II) having an average particle size of 10 $\mu$m and containing 0.40 weight% platinum metal.

A curable organopolysiloxane composition was prepared by the addition, with mixing to homogeneity, of 0.21 g of powder II to 100 g of the hydrosilylation-curable organopolysiloxane composition prepared as described in Example 1. The storage stability and thermal curing properties of this curable organopolysiloxane composition were determined using the methods described in Example 1, and these results are

6

reported in Table 2. The only change from the evaluation procedure described in Example 1 is that the viscosity was measured after 60 days rather than after 90 days. For comparative purposes the same curable organopolysiloxane composition was prepared using powder I in place of methyl alcohol-washed powder II. The amount of the powder II was equivalent to the same platinum metal content present in the composition containing powder II. The storage stability and thermal curing properties of the resultant curable organopolysiloxane composition were also measured, and the results are reported in Table 2 as Comparison Example 3.

### TABLE 2

| property | Example 2 | Comparison Example 3 |
|---|---|---|
| type of catalyst | powder after methyl alcohol wash | powder before methyl alcohol wash |
| **curing properties** | | |
| $I_t$ (seconds) | 18 | 18 |
| $T_{90}$ (seconds) | 260 | 260 |
| **storage stability** | | |
| viscosity immediately after preparation | (3300 cp) 3.3 Pa·s | (3300 cp) 3.3 Pa·s |
| viscosity after 60 days | (5000 cp) 5 Pa·s | could not be measured (gelled after 2 days) |

Example 3

A catalyst composition was prepared by dissolving (1) 16.0 g of a silicone resin exhibiting a softening point of 110°C and consisting essentially of diphenylsiloxane units, dimethylsiloxane units, and phenylsiloxane units in a 22 : 14 : 64 molar ratio, and (2) 2.0 g of the platinum/vinylsiloxane complex catalyst prepared as described in Reference Example 1 in 330 g methylene chloride. This methylene chloride solution was added to water containing 15 g polyvinyl alcohol (Gosenol® GL-05 from Nippon Gosei Kagaku Kogyo Kabushiki Kaisha) while stirring the water in order to prepare a water-based dispersion of the methylene chloride solution. The entire quantity of methylene chloride was removed over 48 hours by injecting nitrogen gas into this aqueous dispersion while maintaining the temperature of the composition at from 25 to 40°C. The resultant suspension of a microfine solid dispersed in water was placed in a centrifugal separator and the microfine particulate was separated. 10 g of the separated particulate material were washed once with water and was then washed by stirring together with approximately 500 g of cyclic dimethylsiloxanes. The washed particulate was analyzed, and was found to be a powder with an average particle size of 7μm containing 0.20 weight% platinum metal.

The properties of this particulate as a hydrosilylation reaction catalyst were then investigated using a curable composition prepared as follows:

100 g of a dimethylvinylsiloxy-terminated polydimethylsiloxane exhibiting a viscosity of $1,5 \times 10^{-3} m^2/s$ (1,500 centistokes)and 20 g of fumed silica exhibiting a specific surface area of 200 m2/g that had been previously hydrophobicized with hexamethyldisilazane were mixed, and 2.8 g methylhydrogenpolysiloxane with the average molecular formula

$$Me_3SiO(Me_2SiO)_3(MeHSiO)_5SiMe_3$$

was then added with mixing to homogeneity to yield a hydrosilylation-curing organopolysiloxane composition. 0.27 g of the particulate prepared above was added, with mixing to homogeneity, to 100 g of this composition. The storage stability and thermal curing properties of the resultant curable organopolysiloxane composition were measured as described in Example 1, and the results are reported below.

| curing properties | |
| --- | --- |
| T90 (seconds) | 240 |

| storage stability | |
| --- | --- |
| viscosity immediately after preparation (centipoise) Pa•s | (3300) 3,3 |
| viscosity after 90 days (centipoise) Pa•s | (4000) 4 |

## Claims

1. Method for preparing a composition in particulate form comprising a hydrosilylation catalyst containing a metal of the platinum group or a compound thereof dispersed in a silicone resin, said method comprising preparing particles having a diameter not exceeding 100 μm and comprising a mixture of a silicone resin having a softening point of from 50 to 200°C and said hydrosilylation catalyst and washing said particulate with a liquid which is a solvent for said hydrosilylation reaction catalyst and a non-solvent for said silicone resin.

2. Method for preparing a composition in particulate form comprising a hydrosilylation catalyst containing a metal from the platinum group or a compound thereof dispersed in a silicone resin, said method comprising

(A) preparing a solution comprising said catalyst, a silicone resin with a softening point of from 50 to 200°C and a water-insoluble solvent,

(B) dispersing said solution in a mixture of water and a surfactant to form an aqueous dispersion while stirring or shaking said mixture,

(C) evaporating said solvent from said aqueous dispersion at a temperature below the softening point of said silicone resin to obtain an aqueous dispersion of a particulate having an average particle size not exceeding 100 micrometers and comprising said silicone resin and the hydrosilylation reaction catalyst containing a metal of the platinum group or a compound thereof and separating said particulate from said aqueous dispersion,

(D) washing said particulate with a liquid in which said catalyst is soluble and said silicone resin is insoluble and

(E) isolating said particulate from said liquid.

**Patentansprüche**

1. Verfahren zur Herstellung einer Zusammensetzung in Teilchenform, umfassend einen Hydrosilylierungskatalysator, der ein Metall der Platingruppe oder eine Verbindung davon dispergiert in einem Silikonharz enthält, wobei das Verfahren umfaßt, daß man Teilchen herstellt mit einem Durchmesser von nicht mehr als 100 μm, die eine Mischung eines Silikonharzes mit einem Erweichungspunkt von 50 bis 200°C und den Hydrosilylierungskatalysator umfassen, und die Teilchen mit einer Flüssigkeit wäscht, die ein Lösungsmittel für den Hydrosilylierungsreaktionskatalysator, aber kein Lösungsmittel für das Silikonharz ist.

2. Verfahren zur Herstellung einer Zusammensetzung in Teilchenform, umfassend einen Hydrosilylierungskatalysator, der ein Metall der Platingruppe oder eine Verbindung davon dispergiert in einem Silikonharz enthält, wobei das Verfahren umfaßt, daß man
   (A) eine Lösung herstellt, die den Katalysator, ein Silikonharz mit einem Erweichungspunkt von 50 bis 200°C und ein in Wasser unlösliches Lösungsmittel enthält,
   (B) die Lösung in einer Mischung von Wasser und einem Tensid dispergiert, um eine wäßrige Dispersion zu bilden unter Rühren oder Schütteln dieser Mischung,
   (C) das Lösungsmittel aus der wäßrigen Dispersion bei einer Temperatur unterhalb des Erweichungspunktes des Silikonharzes verdampft, um eine wäßrige Dispersion des teilchenförmigen Materials mit einer durchschnittlichen Teilchengröße von nicht mehr als 100 μm zu erhalten, die das Silikonharz und den Katalysator für die Hydrosilylierungsreaktion, der ein Metall der Platingruppe oder eine Verbindung davon enthält, umfaßt, und die Teilchen aus der wäßrigen Dispersion abtrennt,
   (D) das teilchenförmige Material mit einer Flüssigkeit wäscht, in der der Katalysator löslich und das Silikonharz unlöslich ist und
   (E) die Teilchen aus der Flüssigkeit isoliert.

**Revendications**

1. Procédé de préparation d'une composition sous forme particulaire comprenant un catalyseur d'hydrosilylation contenant un métal du groupe du platine ou un de ses composés dispersé dans une résine de silicone, ledit procédé comprenant la préparation de particules ayant un diamètre ne dépassant pas 100 μm et comprenant un mélange d'une résine de silicone ayant un point de ramollissement compris entre 50 et 200°C, et dudit catalyseur d'hydrosilylation, et le lavage desdites particules avec un liquide qui est un solvant pour ledit catalyseur de réaction d'hydrosilylation et un non-solvant pour ladite résine de silicone.

2. Procédé de préparation d'une composition sous forme particulaire comprenant un catalyseur d'hydrosilylation contenant un métal du groupe du platine ou un de ses composés dispersé dans une résine de silicone, ledit procédé comprenant
   (A) La préparation d'une solution comprenant ledit catalyseur, une résine de silicone ayant un point de ramollissement compris entre 50 et 200°C et un solvant insoluble dans l'eau,
   (B) la dispersion de ladite solution dans un mélange d'eau et d'un agent tensio-actif pour former une dispersion aqueuse tout en agitant ou en secouant ledit mélange,
   (C) l'évaporation dudit solvant de ladite dispersion aqueuse à une température inférieure au point de ramollissement de ladite résine de silicone pour obtenir une dispersion aqueuse d'une matière particulaire ayant une taille particulaire ne dépassant pas 100 μm et comprenant ladite résine de silicone et le catalyseur de réaction d'hydrosilylation contenant un métal du groupe du platine ou un de ses composés, et la séparation de ladite matière particulaire d'avec ladite dispersion aqueuse,
   (D) le lavage de ladite matière particulaire avec un liquide dans lequel ledit catalyseur est soluble et ladite résine de silicone est insoluble, et
   (E) l'isolement de ladite matière particulaire à partir dudit liquide.